# EUROPÄISCHE PATENTSCHRIFT

(11) **EP 1 982 784 B1**
(45) Veröffentlichungstag und Bekanntmachung des Hinweises auf die Patenterteilung: **21.08.2013**
(21) Anmeldenummer: 08005461.2
(22) Anmeldetag: 25.03.2008
(51) Int. Cl.: B23B 51/04, B28D 1/14

(54) **Hohlbohrer**
Gouge bit
Mèche creuse

(30) Priorität: 16.04.2007 AT 5802007
(43) Veröffentlichungstag der Anmeldung: 22.10.2008
(73) Patentinhaber: Tyrolit - Schleifmittelwerke Swarovski K.G., 6130 Schwaz (AT)
(72) Erfinder: Neubach, Stefan, 6130 Schwaz (AT); Lochner, Benjamin, 6130 Schwaz (AT); Daxer, Georg, 6130 Schwaz (AT); Fuchs, Gerhard, 6130 Schwaz (AT)
(74) Vertreter: Hofinger, Stephan

(56) Entgegenhaltungen:
- EP-A2- 1 249 481
- WO-A1-98/57771
- US-B1- 6 192 875
- US-B1- 6 595 844

## Beschreibung

Die vorliegende Erfindung betrifft einen Hohlbohrer mit aufgesetzten Schneidsegmenten, wobei zwischen 40 % und 80 % des Umfangs, vorzugsweise zwischen 50 % und 70 % des Umfangs, mit Schneidsegmenten belegt sind.

Derartige Hohlbohrer sind z.B. aus der EP 1 249 481 A2, der WO 98/57771 A1, der US 6 192 875 B1 und der US 6 595 844 B1 bekannt, und werden vorzugsweise in (armierten) Beton eingesetzt, um Durchbrüche zu erzeugen. Versuche der Anmelderin haben dabei gezeigt, dass die Schnittleistung nicht nur von der Belegungsdichte entscheidend beeinflusst wird, sondern bei gegebener Belegungsdichte von der Größe und damit Anzahl der Schneidsegmente.

Erfindungsgemäß ist deshatb vorgesehen, dass für die Anzahl x der Schneidsegmente die Formel D*π*0,4/15<x<D*π*0,8/10 gilt, wobei D der Durchmesser des Hohlbohrers gemessen in mm ist. Idealerweise beträgt die Anzahl x der Schneidelemente etwa D*π*0,6/12.

Mit dieser Ausführungsform konnte eine Leistungssteigerung bis zu 30 % erzielt werden. Der Grund dafür dürfte im Umstand liegen, dass durch die kürzeren Zähne und die höhere Anzahl von Zwischenräumen die Abfuhr des Schneidmaterials verbessert wird und dadurch die Eingriffsbereiche der Schneidsegmente verbessert freigehalten werden. Der Nachteil der höheren Herstellkosten durch die größere Anzahl an Schneidsegmenten, die mit dem Grundkörper verbunden werden müssen, wird durch die Leistungssteigerung mehr als aufgewogen.

Vorzugsweise ist vorgesehen, dass die Schneidsegmente als gesinterte Diamantsegmente ausgebildet sind, die auf den Grundkörper aufgelötet oder mit diesem mittels Laser verschweißt sind.

Um die Anbohrfreudigkeit des Hohlbohrers zu erhöhen kann vorgesehen sein, dass die Schneidsegmente an der Oberseite zumindest im Mittelbereich zugespitzt oder konvex gekrümmt sind.

Weiter Merkmale und Einzelheiten der vorliegenden Erfindung ergeben sich aus der nachfolgenden Figurenbeschreibung. Dabei zeigt:
Fig. 1 einen erfindungsgemäßen Hohlbohrer in perspektivischer Ansicht und
Fig. 2 eine vergrößerte Ansicht des erfindungsgemäßen Hohlbohrers von vorne.

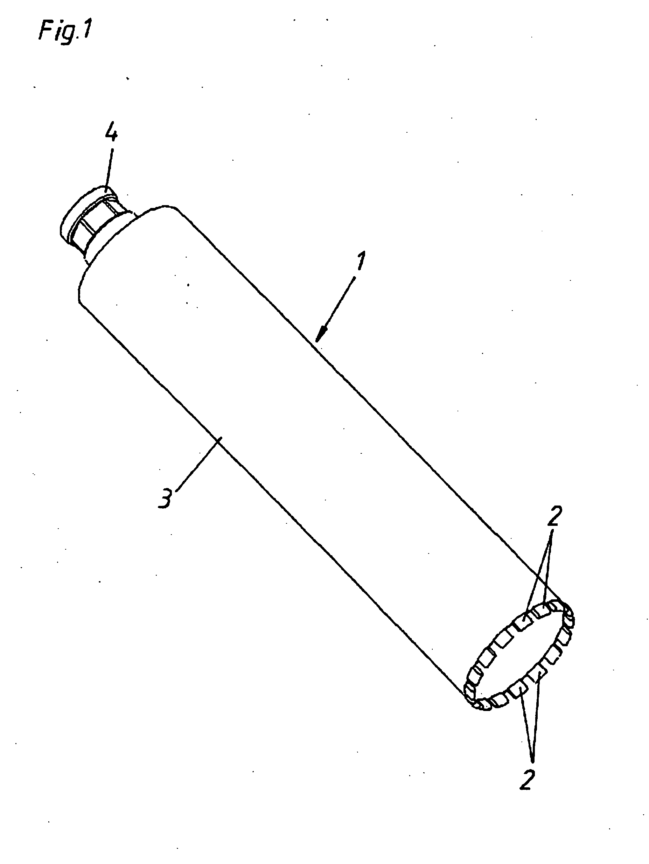

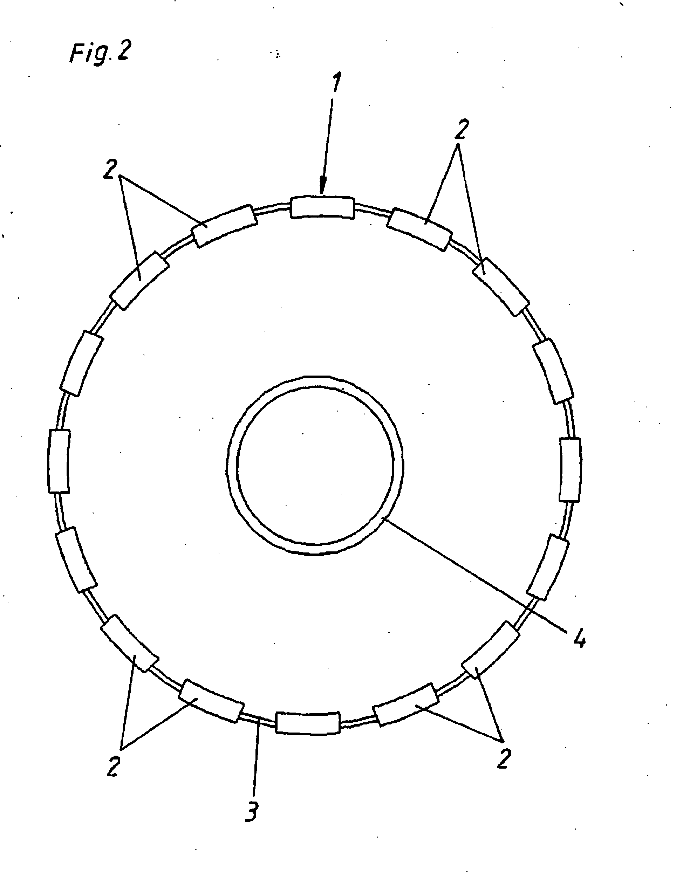

Die Fig. 1 und 2 zeigen einen erfindungsgemäßen Hohlbohrer 1. Der Hohlbohrer 1 weist einen Grundkörper 3 aus Stahl auf, der über den Einspannbereich 4 mit einer Antriebsvorrichtung verbindbar ist.

Erfindungswesentlich sind die Schneidsegmente 2, die in einer Anzahl zwischen D*π*0,5/12 und D*π*0,7/12 an der Bohrkrone befestigt sind. Als optimal hat sich eine Anzahl von D*π*0,6/12 erwiesen. In diesen Formeln ist D der Durchmesser des Hohlbohrers 1 gemessen in mm. Die Belegungsdichte, also das Verhältnis von Schneidsegmenten 2 und dazwischen liegenden Freiräumen, schwankt damit zwischen 40 % und 80 %, wobei vorzugsweise etwa 60 % des Umfangs der Bohrkrone mit Schneidsegmenten 2 belegt sind. Die Länge der Schneidsegmente 2 liegt zwischen 10 mm und 15 mm, vorzugsweise bei etwa 12 mm. Der Durchmesser D liegt zwischen 47 mm und 500 mm.

Bei den Schneidsegmenten 2 handelt es sich um gesinterte Diamantsegmente, die auf den Grundkörper 3 entweder aufgelötet oder mittels Laser aufgeschweißt sind. Sind die Schneidsegmente 2 an der Oberseite zumindest im Mittelbereich zugespitzt oder konvex gekrümmt, wird die Anbohrfreudigkeit des Hohlbohrers 1 dadurch verbessert.

## Patentansprüche

1. Hohlbohrer mit aufgesetzten Schneidsegmenten, wobei zwischen 40 % und 80 % des Umfangs, vorzugsweise zwischen 50 % und 70 % des Umfangs, mit Schneidsegmenten belegt sind, **dadurch gekennzeichnet, dass** für die Anzahl (x) der Schneidsegmente (2) die Formel D*π*0,4/15<x<D*π*0,8/10 gilt, wobei D der Durchmesser des Hohlbohrers (1) gemessen in mm ist.

2. Hohlbohrer nach Anspruch 1, **dadurch gekennzeichnet, dass** die Anzahl (x) der Schneidsegmente (2) etwa D*π*0,6/12 beträgt.

3. Hohlbohrer nach Anspruch 1 oder 2, **dadurch gekennzeichnet, dass** die Schneidsegmente (2) gesinterte Diamantsegmente sind.

4. Hohlbohrer nach einem der Ansprüche 1 bis 3, **dadurch gekennzeichnet, dass** die Schneidsegmente (2) aufgelötet oder mittels Laser mit dem Grundkörper (3) verschweißt sind.

5. Hohlbohrer nach einem der Ansprüche 1 bis 4, **dadurch gekennzeichnet, dass** die Schneidsegmente (2) an der Oberseite zumindest im Mittelbereich zugespitzt oder konvex gekrümmt sind.

## Claims

1. A hollow drill with cutting segments fitted thereto, wherein between 40 % and 80 % of the periphery, preferably between 50 % and 70 % of the periphery, is occupied by cutting segments, **characterized in that** the formula D*π*0.5/12<x>D*π*0.7/12 applies for the number (x) of the cutting segments (2), wherein D is the diameter of the hollow drill (1) measured in mm.

2. A hollow drill according to claim 1, **characterized in that** the number (x) of the cutting segments (2) is approximately D*π*0.6/12.

3. A hollow drill according to claim 1 or claim 2, **characterized in that** the cutting segments (2) are sintered diamond segments.

4. A hollow drill according to one of claims 1 to 3, **characterized in that** the cutting segments (2) are soldered on or are welded to the main body (3) by means of a laser.

5. A hollow drill according to one of claims 1 to 4, **characterized in that** the cutting segments (2) at the top side are pointed or convexly curved at least in the central region.

## Revendications

1. Mèche creuse avec des segments tranchants dressés, dans laquelle entre 40 % et 80 % de la circonférence, de préférence entre 50 % et 70 % de la circonférence, sont garnis de segments tranchants, **caractérisée en ce que** pour le nombre (x) des segments tranchants (2) la formule D*π*0,5/12<x>D*π*0,7/12 s'applique, dans laquelle D, le diamètre de la mèche creuse (1), est mesuré en mm.

2. Mèche creuse selon la revendication 1, **caractérisée en ce que** le nombre (x) des segments tranchants (2) s'élève environ à D*π*0,6/12.

3. Mèche creuse selon la revendication 1 ou 2, **caractérisée en ce que** les segments tranchants (2) sont des segments diamantés frittés.

4. Mèche creuse selon l'une des revendications 1 à 3, **caractérisée en ce que** les segments tranchants (2) sont brasés ou soudés au corps de base (3) à l'aide du laser.

5. Mèche creuse selon l'une des revendications 1 à 4, **caractérisée en ce que** les segments tranchants (2) sont effilés sur le côté supérieur au moins dans la zone médiane ou sont courbés de manière convexe.
